# EUROPÄISCHE PATENTSCHRIFT

(11) **EP 0 812 724 B1**
(45) Veröffentlichungstag und Bekanntmachung des Hinweises auf die Patenterteilung: **05.12.2001**
(21) Anmeldenummer: 97108561.8
(22) Anmeldetag: 28.05.1997
(51) Int. Cl.: B60N 2/44

(54) **An einer Rückenlehne eines Kraftfahrzeugsitzes zu befestigende Rückenstütze**
Back support for attachment to a backrest of a motor vehicle seat
Support arrière destiné à être fixé au dossier d'un siège de véhicules automobiles

(30) Priorität: 01.06.1996 DE 29609758 U
(43) Veröffentlichungstag der Anmeldung: 17.12.1997
(73) Patentinhaber: ADCON-Verwaltungsgesellschaft mbH, 95346 Stadtsteinach (DE)
(72) Erfinder: Reithmeier, Harald, 95346 Stadtsteinach (DE)
(74) Vertreter: Schlagwein, Udo, Dipl.-Ing.

(56) Entgegenhaltungen:
- DE-A- 4 333 855
- DE-U- 9 418 167
- DE-U- 9 418 878
- US-A- 5 383 711

## Beschreibung

Die Erfindung betrifft eine an einer Rückenlehne eines Kraftfahrzeugsitzes zu befestigende Rückenstütze, welche zur seitlichen Abstützung des Kopfes eines auf dem Kraftfahrzeugsitz sitzenden Kindes ein Rückenteil mit jeweils einem aus der Ebene des Rückenteils nach vorn hin vorspringenden Ohr im oberen Bereich an jeder Seite aufweist.

Rückenstützen der vorstehenden Art werden in Kraftfahrzeugen eingesetzt, um Kindern die Möglichkeit zu geben, in sitzender Haltung den Kopf seitlich an einem der beiden Ohren der Rückenstütze anzulehnen, damit sie sitzend möglichst bequem schlafen können. Problematisch ist bei solchen Rückenstützen der Verlauf des Schultergurtbereiches eines Anschnallgurtes, da dieser durch die Ohren auf Abstand von dem anzugurtenden Kind gehalten wird. Für eine möglichst gute Schutzwirkung von Anschnallgurten ist es jedoch erforderlich, dass diese möglichst eng am Körper der angegurteten Person anliegen. Ein anderes Problem bei den in Kraftfahrzeugen installierten Anschnallgurten liegt beim Angurten von Kindern darin, dass trotz vielfach schon vorhandener Verstellmöglichkeit des oberen Umlenkpunktes des Anschnallgurtes der Schultergurtbereich häufig zu hoch am Körper verläuft. Durch die Ohren der Rükkenstütze wird dieser Missstand oftmals noch verstärkt, weil die Ohren den Gurt nicht nur nach vorn hin wegdrücken, sondern zusätzlich die Tendenz haben, den Gurt nach oben zu schieben. Er verläuft dann anstatt über den Brustbereich des Kindes zwischen Kopf und Schulter und hat dann bei einem Aufprallunfall nicht mehr die Funktion einer Rückhalteeinrichtung, sondern eher die eines Stranguliermittels.

Der Erfindung liegt das Problem zugrunde, eine Rückenstütze der eingangs genannten Art so zu gestalten, dass die üblicherweise im Kraftfahrzeug vorhandenen Anschnallgurte eine möglichst gute Rückhaltefunktion auszuüben vermögen.

Dieses Problem wird erfindungsgemäß dadurch gelöst, dass zumindest ein Ohr ausschließlich im oberen Bereich fest mit dem Rückenteil verbunden und im unteren Bereich durch einen in Haupterstreckungsrichtung des Rückenteils verlaufenden Schlitz von dem Rückenteil getrennt ist.

Durch diese Gestaltung der Rückenstütze kann man den über die Schulter und Brust zu führenden Bereich des Anschnallgurtes von unten her in den dem oberen Gurtumlenkbeschlag zugewandten Schlitz der Rückenstütze einschieben. Dadurch ist der Gurt gegen ein Verrutschen nach oben gesichert, so dass er korrekt über den Brustbereich eines angegurteten Kindes verläuft. Weiterhin vermag der Gurt durch diesen Schlitz straff über die anzugurtende Person zu verlaufen, was für die Rückhaltefunktion vorteilhaft ist. In der Praxis wird man beide Ohren der Rückenstütze mit dem erfindungsgemäßen Schlitz versehen, so dass man die Rückenstütze wahlweise auf der rechten oder linken Seite im Kraftfahrzeug benutzen kann.

Da bei der erfindungsgemäßen Rückenstütze die Ohren den Gurt nicht mehr umlenken und nach oben hin abweisen, besteht dank der Erfindung die Möglichkeit, die Ohren größer als bei den bekannten Rückenstützen auszuführen, so dass sie einen besonders guten Halt für den Kopf eines schlafenden Kindes bieten.

Die Rückenstütze unterscheidet sich optisch nicht von den bisher gebräuchlichen Rückenstützen, wenn gemäß einer Weiterbildung der Erfindung die Ohren jeweils im Bereich der Schlitze mit Vorspannung von der Seite her gegen das Rückenteil anliegen. Hierdurch wird zusätzlich sichergestellt, dass der durch den Schlitz geführte Gurtteil bei Nichtgebrauch vollständig aus dem Schlitz herausgelangt. Dadurch braucht man ihn beim Anschnallen eines Kindes nicht jedesmal erneut in den Schlitz einzuführen.

Die Rückenstütze hält besonders gut an einer Rückenlehne eines Kraftfahrzeugsitzes, wenn das Rückenteil auf seiner Rückseite ein quer zum Rückenteil über zumindest nahezu seiner vollen Breite verlaufendes Textilhaftband aufweist.

Die Rückenstütze ist zuverlässig gegen ein Wegrutschen zur Seite gesichert, wenn das Textilhaftband in Höhe der Schlitze verläuft.

Die Erfindung lässt verschiedene Ausführungsformen zu. Eine davon ist in der Zeichnung dargestellt und wird nachfolgend beschrieben. Diese zeigt in
- Fig.1: eine Draufsicht auf die Rückseite einer erfindungsgemäß gestalteten Rückenlehne,
- Fig.2: eine Seitenansicht der Rückenlehne.

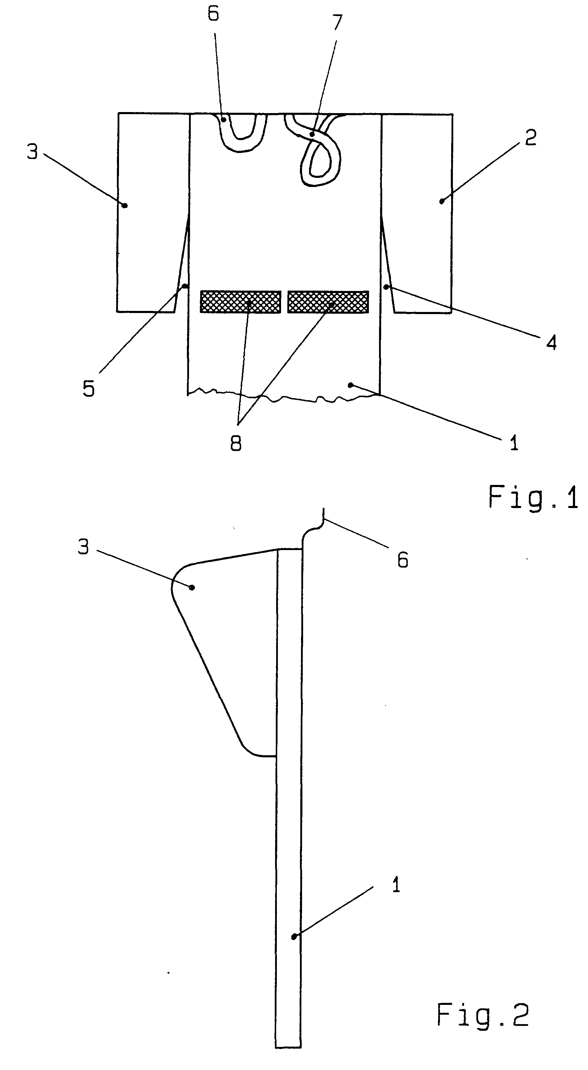

Die Figur 1 zeigt von der Rückenlehne ein längliches Rückenteil 1, an welchem im oberen Bereich an jeder Seite ein Ohr 2, 3 befestigt ist. Hierbei ist wichtig, dass die Ohren nur im oberen Bereich mit dem Rückenteil 1 verbunden sind. Von unten her trennt jeweils ein bis etwa in halber Höhe der Ohren 2, 3 reichender Schlitz 4, 5 die Ohren 2, 3 vom Rückenteil 1. Je nachdem, ob die Rückenstütze auf der rechten oder linken Fahrzeugseite eines Fahrzeugsitzes benutzt wird, kann man durch den Schlitz 4 oder 5 den von der oberen Umlenkung eines Anschnallgurtes führenden Part des Anschnallgurtes führen. Dadurch ist sichergestellt, dass die Ohren 2, 3 den Gurt nicht ablenken. Am oberen Ende des Rückenteils 1 sind zwei Riemen 6, 7 angebracht, mit denen man die Rückenstütze an einer Kopfstütze einer Rückenlehne eines Kraftfahrzeugsitzes befestigen kann. Zusätzlich wird die Rückenstütze durch ein Textilhaftband 8 gesichert, welches in Höhe der unteren Enden der Ohren 2, 3 auf dem Rückenteil 1 angebracht ist und bei Benutzung der Rückenstütze an der Rückenlehne des Kraftfahrzeugsitzes haftet.

Die Figur 2 verdeutlicht, dass das Ohr 3 und entsprechend auch das andere, in dieser Figur nicht zu sehende Ohr 2 relativ weit nach vorn aus der Ebene des Rückenteils 1 vorspringt, so dass der Kopf eines Kindes gut abgestützt werden kann.

### Bezugszeichenliste

- 1: Rückenteil
- 2: Ohr
- 3: Ohr
- 4: Schlitz
- 5: Schlitz

- 6: Riemen
- 7: Riemen
- 8: Textilhaftband

## Patentansprüche

1. An einer Rückenlehne eines Kraftfahrzeugsitzes zu befestigende Rückenstütze, welche zur seitlichen Abstützung des Kopfes eines auf dem Kraftfahrzeugsitz sitzenden Kindes ein Rückenteil mit jeweils einem aus der Ebene des Rückenteils nach vorn hin vorspringenden Ohr im oberen Bereich an jeder Seite aufweist, **dadurch gekennzeichnet, dass** zumindest ein Ohr (2, 3) ausschließlich im oberen Bereich fest mit dem Rückenteil (1) verbunden und im unteren Bereich durch einen in Haupterstreckungsrichtung des Rückenteils (1) verlaufenden Schlitz (4, 5) von dem Rückenteil (1) getrennt ist.

2. Rückenstütze nach Anspruch 1, **dadurch gekennzeichnet, dass** die Ohren (2, 3) jeweils im Bereich der Schlitze (4, 5) mit Vorspannung von der Seite her gegen das Rückenteil (1) anliegen.

3. Rückenstütze nach den Ansprüchen 1 oder 2, **dadurch gekennzeichnet, dass** das Rückenteil (1) auf seiner Rückseite ein quer zum Rückenteil (1) über zumindest nahezu seiner vollen Breite verlaufendes Textilhaftband (8) aufweist.

4. Rückenstütze nach Anspruch 3, **dadurch gekennzeichnet, dass** das Textilhaftband (8) in Höhe der Schlitze (4, 5) verläuft.

## Claims

1. Back support, for attachment to a back-rest of a motor vehicle seat, which has a back part with lobes in the upper region, one on each side, projecting forwards from the plane of the back part, affording lateral support for the head of a child sitting on the motor vehicle seat, **characterized in that** at least one lobe (2, 3) is permanently joined to the back part (1) in the upper region only, and is separated from the back part (1) in the lower region by a slit (4, 5) extending in the principal extension direction of the back part (1).

2. Back support according to Claim 1, **characterized in that** each lobe (2, 3) is under preloading so as to press against the back part (1) from the side in the region of the respective slit (4, 5).

3. Back support according to Claim 1 or Claim 2, **characterized in that** the back part (1) has on its reverse side a textile pressure-sensitive adhesive tape (8) extending across the back part (1) over at least nearly the full width thereof.

4. Back support according to Claim 3, **characterized in that** the textile pressure-sensitive adhesive tape (8) is level with the slits (4, 5).

## Revendications

1. Soutien dorsal destiné à être fixé à un siège de véhicule automobile, qui présente, pour donner un appui latéral à la tête d'un enfant assis sur le siège du véhicule automobile, une partie dorsale comprenant de chaque côté, dans sa région supérieure, une oreillette qui fait saillie vers l'avant en sortant du plan de la partie dorsale, **caractérisé en ce qu'**au moins une oreillette (2, 3) est reliée solidement à la partie dorsale (1) uniquement dans la région supérieure et que, dans la région inférieure, elle est séparée de la partie dorsale (1) par une fente (4, 5) qui s'étend dans la direction principale de l'extension de la partie dorsale (1).

2. Soutien dorsal selon la revendication 1 , **caractérisé en ce que**, dans la région des fentes (4, 5), les oreillettes (2,3) sont appuyées contre la partie dorsale (1) par le côté avec précontrainte.

3. Soutien dorsal selon une des revendications 1 ou 2, **caractérisé en ce que** la partie dorsale (1) présente, sur sa face arrière, une bande adhésive textile (8) qui s'étend transversalement à la partie dorsale (1) sur au moins presque toute sa largeur.

4. Soutien dorsal selon la revendication 3, **caractérisé en ce que** la bande adhésive textile (8) s'étend à la hauteur des fentes (4, 5).
